# EUROPEAN PATENT APPLICATION

(11) **EP 2 481 627 A2**
(43) Date of publication of application: **01.08.2012**
(21) Application number: 12150901.2
(22) Date of filing: 12.01.2012
(51) Int. Cl.: B60L 11/18

(54) **Automatic charging station for electric vehicles and charging method thereof**

(30) Priority: 26.01.2011 CN 201120025527 U
(71) Applicant: Sunyen Co., Ltd., Taipei (TW)
(72) Inventor: Tu, Yu-Ta, Taipei (TW)
(74) Representative: Chaillot, Geneviève

(57) **Abstract**

The charging station of the invention employs an RFID system (2) to read out charging conditions of the electric vehicle to be charged. The charging conditions are sent to a console (1). The console (1) controls an automatic charging mechanism (3) to charge the electric vehicle to be charged according to the charging conditions. The automatic charging mechanism (3) automatically detects the location of the charging port (42) of the electric vehicle to be charged and controls a robot hand to connect the charging port (42). An automatic payment mechanism may be activated after charge has been completed.

## Description

### Background of the Invention

### 1. Technical Field

The invention relates to electric vehicles, particularly to charging technique of electric vehicles.

### 2. Related Art

Due to the serious result of global warming and progressive exhaustion of petroleum resource of the earth, electric vehicles with low energy consuming and low pollution will certainly be the mainstream of transportation in the future. Electric vehicles are powered by batteries. Batteries of the electric vehicles must be repeated charged to maintain sufficient electricity. The key factors of popularization of electric vehicles are the density of charging stations and convenience of the charging procedure. The charging procedure of current charging stations is similar to the conventional gas stations. The charging conditions, such as voltage and current, of the electric vehicle to be charged must be confirmed manually and then the driver or staff manually connects the charging plug to the charging port of the electric vehicle to be charged. The payment is usually performed by inserting coins. In other words, the charging process almost completely relies upon manual operation. Not only does it expend many labor efforts and increase business costs, but also errors of charging conditions tend to occur because of manual confirmation. These errors may cause cessation of the charging process or damage of the batteries of the electric vehicle.

### Summary of the Invention

An object of the invention is to provide an automatic charging station and charging method thereof, which can automatically read out charging conditions of the electric vehicle to be charged and perform the charging process according to the charging conditions. The charging process is performed by an automatic charging mechanism without any manual operation. Thus the labor cost can be efficiently reduced and human errors also can be avoided.

To accomplish the above object, the invention employs an RFID system to read out charging conditions of the electric vehicle to be charged. The charging conditions are sent to a console. The console controls an automatic charging mechanism to charge the electric vehicle to be charged according to the charging conditions. The automatic charging mechanism automatically detects the location of the charging port of the electric vehicle to be charged and controls a robot hand to connect the charging port. An automatic payment mechanism may be activated after charge has been completed.

It is therefore provided an automatic charging station for electric vehicles, comprising:
a console;
a radio frequency identification (RFID) system electrically connecting the console for reading out charging conditions of an electric vehicle to be charged; and
an automatic charging mechanism disposed at a charging area and electrically connecting the console;
wherein when the electric vehicle to be charged comes into the charging area, the RFID system will read out the charging conditions thereof and send to the console, and then the console will control the automatic charging mechanism to charge the electric vehicle.

### Brief Description of the Drawings

FIG. 1 is a systematic block diagram of the invention;
FIG. 2 is a schematic view of the charging station with laterally mounted automatic charging mechanism;
FIG. 3 is a schematic view of the charging station with bottom mounted automatic charging mechanism; and
FIG. 4 is a flowchart of the charging method of the invention.

### Detailed Description of the Invention

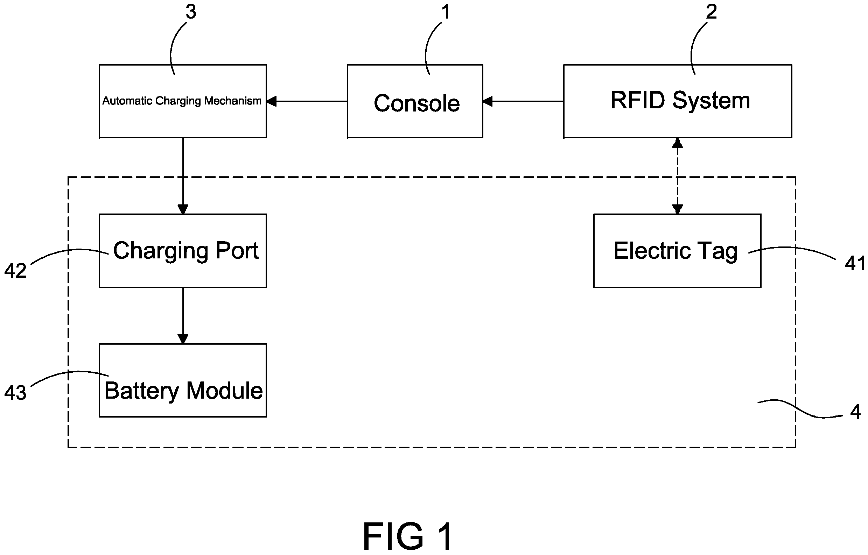

FIG. 1 illustrates a block diagram of the invention. The charging station of the invention includes a console 1, a Radio-Frequency Identification (RFID) system 2 and an automatic charging mechanism 3. The RFID system 2 and automatic charging mechanism 3 electrically connect the console 1. The RFID system 2 is pairable with an electric tag 41 mounted in an electric vehicle 4. The charging conditions of the electric vehicle 4, such as charging voltage, current and capacity, are stored in the electric tag 41. When an electric vehicle 4 carrying the electric tag 41 comes into the charging area of the charging station, the RFID system 2 will emit electromagnetic waves to activate the electric tag 41 and the electric tag 41 will transmit the charging conditions of the electric vehicle 4 to the RFID system 2. Then the RFID system 2 transfers the charging conditions to the automatic charging mechanism 3. Substantially, the automatic charging mechanism 3 is a robot hand capable of detecting the location of charging port 42 of the electric vehicle 4 and moving a charging plug to connect the charging port 42 electrically connecting the battery module 43. Thus the automatic charging mechanism 3 may charge the battery module 43 after the connection between the charging port 42 and charging plug has been finished. The charging conditions are extracted via the RFID system 2 without human operation, so potential human errors can be avoided.

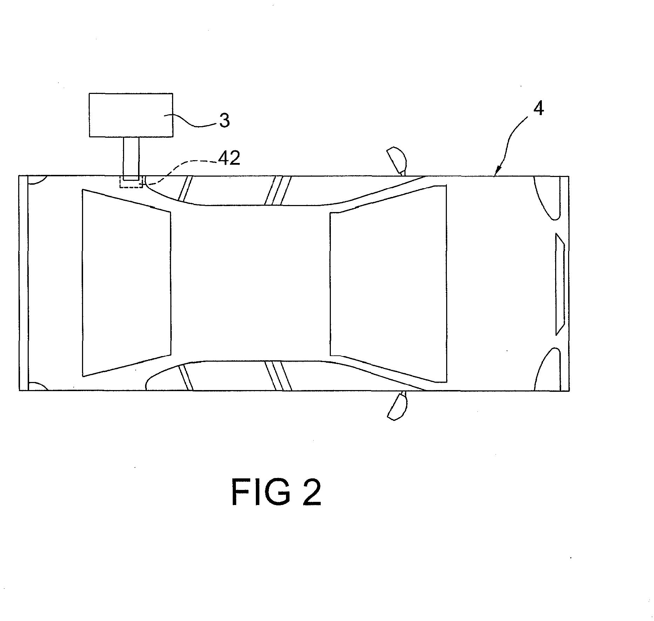

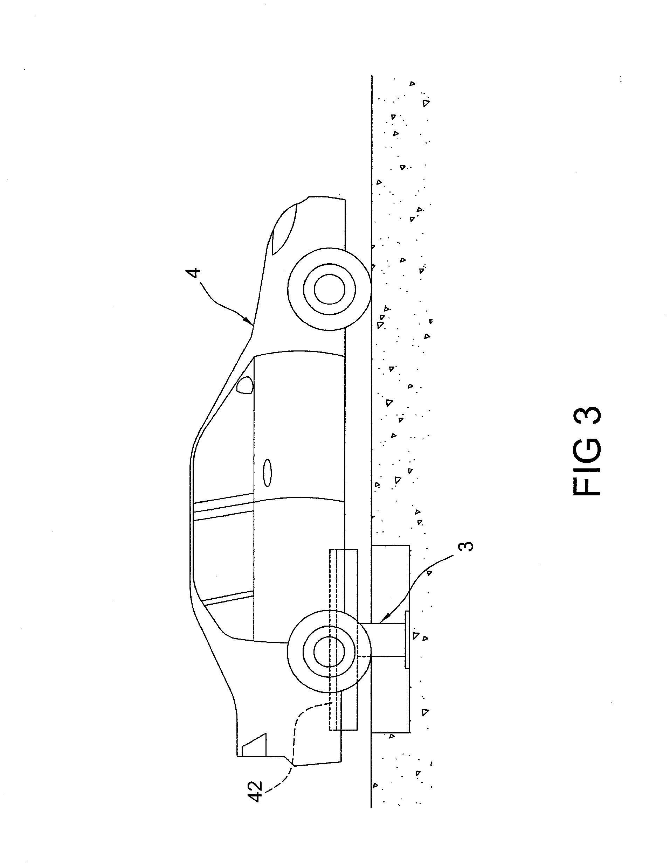

The automatic charging mechanism 3 may be configured into two kinds of arrangements. The one is for those electric cars 4 with laterally mounted charging ports 42 as shown in FIG. 2. The other one is for those electric vehicles 4 with bottom mounted charging ports 42 as shown in FIG. 3. As can be seen in FIG. 2, for those electric cars 4 with laterally mounted charging ports 42, the automatic charging mechanism 3 is disposed just beside the charging area for easily connecting with the charging port 42. For those electric vehicles 4 with bottom mounted charging ports 42, the automatic charging mechanism 3 is disposed just on the ground of the charging area. A charging station which is equipped with these two kinds of automatic charging mechanisms 3 can choose either of both to perform charging process according to the charging conditions read via the RFID system 2.

In a preferred embodiment, the console 1 may further electrically connect an automatic payment mechanism, which can use credit cards, pre-paid cards or cash cards to perform electronic payment.

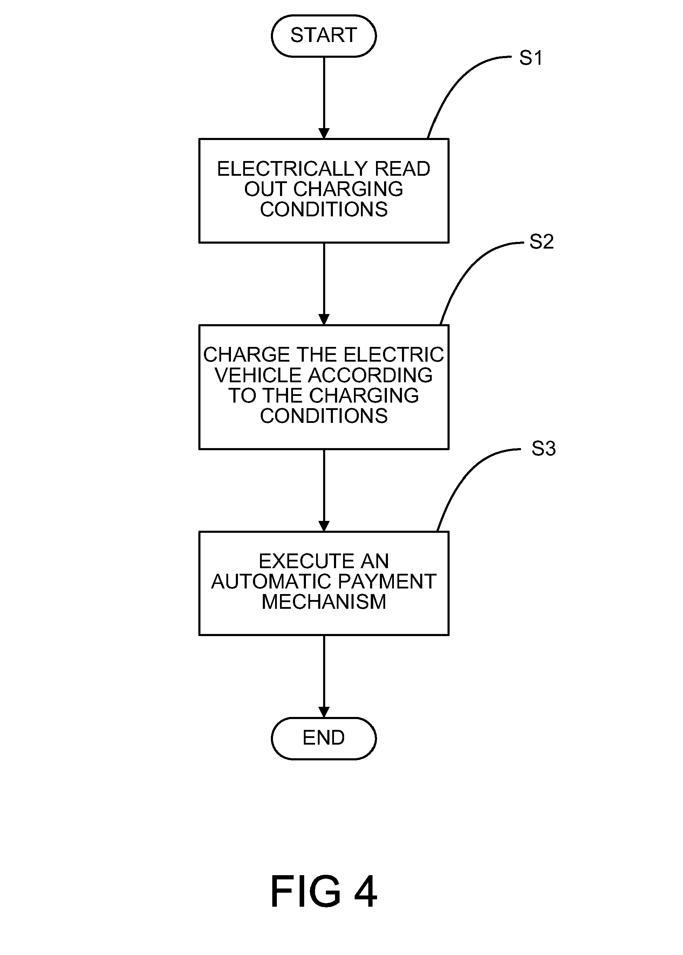

Please refer to FIG. 4, which is a flowchart of the charging method of the invention. In step S1, the charging conditions are electrically read out such as using an RFID system. In step S2, the electric vehicle is charged according to the charging conditions. After the step S2 has been finished, an automatic payment mechanism may be preferably performed to pay the payment due in step S3.

Those skilled in the art will appreciate that numerous changes and modifications can be made to the preferred embodiment of the invention, and that such changes and modifications can be made without departing from the spirit of the invention.

## Claims

1. An automatic charging station for electric vehicles, comprising:
a console (1);
a radio frequency identification (RFID) system (2) electrically connecting the console (1) for reading out charging conditions of an electric vehicle (4) to be charged; and
an automatic charging mechanism (3) disposed at a charging area and electrically connecting the console (1);
wherein when the electric vehicle (4) to be charged comes into the charging area, the RFID system (2) will read out the charging conditions thereof and send to the console (1), and then the console (1) will control the automatic charging mechanism (3) to charge the electric vehicle (4).

2. The charging station of claim 1, wherein the automatic charging mechanism (3) further comprises a robot hand.

3. The charging station of claim 1, wherein the automatic charging mechanism (3) is disposed beside the charging area.

4. The charging station of claim 1, wherein the automatic charging mechanism (3) is disposed on the ground of the charging area.

5. A method for charging an electric vehicle, comprising the steps in the order named:
a) electrically reading out charging conditions of the electric vehicle (4); and
b) charging the electric vehicle (4) according to the charging conditions.

6. The method of claim 5, further comprising a step of:
c) executing an automatic payment mechanism.

7. The method of claim 6, wherein the automatic payment mechanism is implemented by a credit card, a pre-paid card or a cash card.
